Europäisches Patentamt

European Patent Office

Office européen des brevets

(19)

(11) **EP 1 148 283 A2**

(12) **EUROPEAN PATENT APPLICATION**

(43) Date of publication:
24.10.2001 Bulletin 2001/43

(51) Int Cl.$^7$: **F16L 11/08**

(21) Application number: **01303652.0**

(22) Date of filing: **20.04.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **21.04.2000 JP 2000121390**
**27.09.2000 JP 2000294827**

(71) Applicant: **Bridgestone Corporation**
**Tokyo (JP)**

(72) Inventors:
• **Monobe, Hisanobu**
**Yokohama-shi, Kanagawa 247-0027 (JP)**
• **Kuwamoto, Kenji**
**Yokohama-shi, Kanagawa 224-0003 (JP)**

(74) Representative: **Whalley, Kevin**
**MARKS & CLERK,**
**57-60 Lincoln's Inn Fields**
**London WC2A 3LS (GB)**

(54) **Refrigerant transporting rubber hose**

(57) A refrigerant transporting rubber hose which is capable of reducing the refrigerant permeation amount to a higher extend than heretofore while maintaining the practicability of its extruded skin surface and without increasing the volume of the hose nor sacrificing mandrel removability. The hose is of a layered structure at least comprising an inner layer (1) and an outer layer (3), wherein an inner layer material forming the inner layer contains 60-200 parts by weight of a scale-shape filler (4) and 10-100 parts by weight of carbon black per 100 parts by weight of a rubber material having as small a permeation coefficient against a refrigerant to be transported as possible.

## Fig.1 (a)

EP 1 148 283 A2

**Description**

The present invention generally relates to a refrigerant transporting rubber hose for automobiles (hereinafter, also referred to simply as "hose"), particularly to a refrigerant transporting rubber hose capable of reducing the refrigerant permeation amount without changing its thickness and having an extruded rubber surface for practical use as it is extruded. The present invention also relates to a refrigerant transporting rubber hose capable of reducing the refrigerant permeation amount without changing its thickness and having a good mandrel removability.

Flon gas called as "R-134a" has long been used as a refrigerant for automobiles, and what is important for a hose for conveying such a flon gas is how to transport the gas without permeation to the exterior. Attempts to find out a polymer having as small a permeation coefficient against "R-134a" as possible and use such polymer as an inner layer material have been made. Actually, nitrile-butadiene rubber (NBR), hydrogenated nitrile-butadiene rubber (H-NBR), ethylene-propylene-diene rubber (EPDM), chloroprene rubber (CR), isobutylene-isoprene rubber (IIR), urethane rubber, blends thereof, and other various polymers have been investigated. As a result of investigation, since it was found that, of these rubber materials, the permeation coefficients against "R-134a" of butyl-based polymers are the smallest, butyl-based polymers have come to be commonly employed as inner layer materials for refrigerant transporting rubber hoses, eventually up to the present. Moreover, there has been known a hose the inner layer material of which incorporates a scale-shape filler with which to further reduce the refrigerant permeation amount (Japanese Patent Laid-Open Publication No. Hei 10-47552).

For further reducing the "R-134a"permeation amount of the rubber hose recited in Japanese Patent Laid-Open Publication No. Hei 10-47552, it is necessary to find out or synthesize a novel polymer having a smaller permeation coefficient or thicken the rubber hose. However, there have been problems that synthesis of a novel polymer suitable for a refrigerant transporting rubber hose, the former idea, has not been realized yet, and that the latter countermeasure results in an increase in the volume of the rubber hose leading to difficulties in making the hose more space-saving because the hose is used in such a limited area as the engine room of an automobile.

Moreover, it is possible to further reduce the permeation amount by increasing the amount of a scale-shape filler to be added, which has been used in the prior art. However,when rubber is mixed with a large amount of a scale-shape filler and kneaded, there arises the problem that not only the quality of its extruded skin surface gets degraded, but also its mandrel removability in the course of production becomes extremely bad, which is unfavorable from a practical point of view. The present situation is that there has been provided no refrigerant transporting rubber hose which has both practicability and low-permeability.

Accordingly, a first object of the present invention is to provide a refrigerant transporting rubber hose capable of reducing the refrigerant permeation amount to a higher extent than earlier while maintaining the practicability of its extruded skin surface and without increasing the volume of the hose.

A second object of the present invention is to provide a refrigerant transporting rubber hose capable of reducing the refrigerant permeation amount to a higher extent than earlier without increasing the volume of the rubber hose nor sacrificing mandrel removability.

The inventors made intensive studies to achieve the first object described above, and finally found that, by adding a predetermined amount of carbon black to a hose inner material in addition to a scale-shape filler, even when the amount of the scale-shape filler is increased, a refrigerant transporting rubber hose capable of reducing the permeation amount of a refrigerant, particularly "R-134a", to a higher extent than earlier can be obtained without degrading its extruded skin surface nor increasing the volume of the hose. The present invention was accomplished based on this finding.

That is, the present invention provides a refrigerant transporting rubber hose of a layered structure at least comprising an inner layer and an outer layer, wherein an inner layer material forming the inner layer contains 60 - 200 parts by weight of a scale-shape filler and 10 - 100 parts by weight of carbon black per 100 parts by weight of a rubber material having as small a permeation coefficient against a refrigerant to be transported as possible.

The rubber material is preferably a butyl-based rubber. Moreover, it is preferred that the aspect ratio R of the scale-shape filler satisfies the relation represented by the following formula:

$$2 \leqq R \leqq 100$$

and the average diameter of the scale-shape filler is 0.5 - 700 $\mu$ m. Moreover, the refrigerant transporting rubber hose of the present invention is suitable for the case in which the refrigerant to be transported is a fluorine-containing compound. The amount of the scale-shape filler to be added is preferably 70 - 150 parts by weight per 100 parts by weight of the rubber material. Furthermore, the amount of the carbon black to be added is preferably 30-60 parts by weight per 100 parts by weight of the rubber material.

As a result of diligent studies made to achieve the second object, the inventors found that, by making an inner tube rubber layer so as to have a two-layer structure constituted of different rubber blends the inner layer of which is of a rubber blend selected taking mandrel removability into consideration and the outer layer of which incorporates predetermined amounts of a scale-shape filler, carbon black, and a silane coupling agent, a refrigerant transporting rubber hose capable of reducing the permeation amount of a refrigerant, particularly "R-134a", to a higher extent than earlier can be obtained without sacrificing its mandrel removability even when the amount of the scale-shape filler is increased, increasing the volume of the hose, nor adversely affecting its gas blister resistance. The following present invention was accomplished based on this finding.

That is, another aspect of the present invention is a refrigerant transporting rubber hose formed by laminating, from its inner layer-side, at least an inner tube rubber layer, a reinforcing layer, and an outer covering rubber layer in this order, the inner tube rubber layer having a laminated-structure constituted of different rubber blends the inner layer of which is a first inner tube rubber layer and the outer layer of which is a second inner tube rubber layer, each of the first inner tube rubber layer and the second inner tube rubber layer being made with a rubber material of which the permeability coefficient against a refrigerant to be transported is low, the second inner tube rubber layer containing, per 100 parts by weight of the rubber material, 60 - 200 parts by weight of a scale-shape filler, 10 - 100 parts by weight of carbon black, and 0.5 - 5 parts by weight of a silane coupling agent.

Moreover, still another aspect of the present invention is a refrigerant transporting rubber hose formed by laminating, from its inner layer-side, at least an inner tube rubber layer, a reinforcing layer, and an outer covering rubber layer in this order, the inner tube rubber layer having a laminated-structure constituted of different rubber blends the inner layer of which is a first inner tube rubber layer and the outer layer of which is a second inner tube rubber layer, each of the first inner tube rubber layer and the second inner tube rubber layer being made with a rubber material of which the permeability coefficient against a refrigerant to be transported is low, the first inner tube rubber layer containing, per 100 parts by weight of the rubber material, less than 50 parts by weight of a scale-shape filler and 10 - 100 parts by weight of carbon black.

It is preferred that the first inner tube rubber layer contains 0.5 - 5 parts by weight of a silane-coupling agent per 100 parts by weight of the rubber material. The rubber material is preferably a butyl-based rubber. Further, it is preferred that the aspect ratio R of the scale-shape filler satisfies the relation represented by the following formula:

$$2 \leqq R \leqq 100$$

and the average diameter of the scale-shape filler is 0.5 - 700 $\mu$ m. Moreover, the refrigerant transporting rubber hose of the present invention is suitable for the refrigerant to be transported of a fluorine-containing compound.

Fig. 1(a) is a cross-sectional view showing an example of the refrigerant transporting rubber hose of the present invention;

Fig. 1(b) is an enlarged schematic view showing part of the inner layer of the hose of Fig. 1(a);

Fig. 2(a) is a sectional view showing an example of a conventional refrigerant transporting rubber hose;

Fig. 2(b) is an enlarged schematic view showing part of the inner layer of the hose of Fig. 2(a);

Fig. 3 is a partially-broken front view showing an example of the structure of the refrigerant transporting rubber hose;

Fig. 4 is a partially-broken front view showing another example of the structure of the refrigerant transporting rubber hose;

Fig. 5 is a perspective view showing the laminated structure of one embodiment of the refrigerant transporting hose of the present invention;

Fig. 6 is a partially-broken perspective view showing a blister due to gas blistering; and

Fig. 7 is an enlarged cross-sectional view showing the cross-section taken along the line A-A of Fig. 6.

Hereinafter, embodiments of the present invention will be described.

In a preferred embodiment of the refrigerant transporting rubber hose of the present invention, it is important that an inner layer material forming the inner layer contains predetermined amounts of a rubber material having as small a permeation coefficient against a refrigerant to be transported as possible, a scale-shape filler, and carbon black.

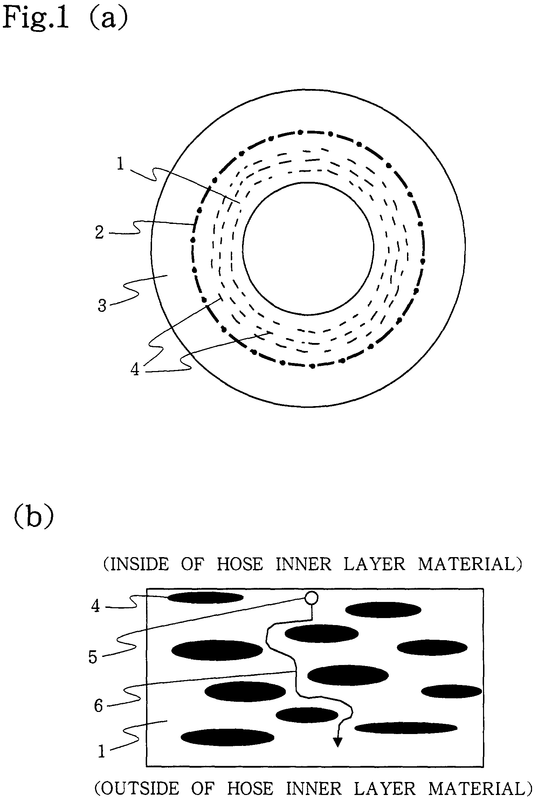

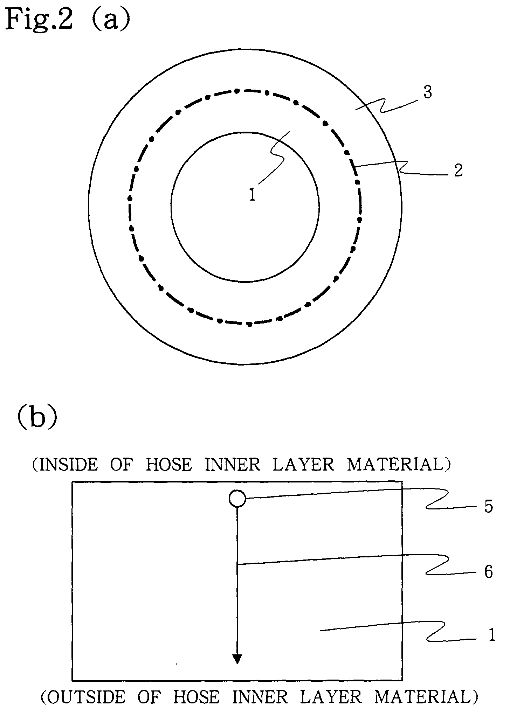

In Fig. 1(a), the cross-section of the hose of the present invention is schematically shown. As is illustrated, a scale-shape filler 4 incorporated into an inner layer 1 is oriented in layers in the extrusion direction, preventing molecules 5 of a refrigerant such as "R-134a" from straightly permeating through the inner layer 1 as in the case of a conventional hose (Figs. 2(a) and 2(b)). That is, the refrigerant molecules 5 dispersing toward the exterior of the hose, i.e., in a direction perpendicular to the extrusion direction cannot choose but detour along the scale-shape filler 4 (Fig. 2(b)). In other words, the scale-shape filler 4 has the effect of making the route that molecules 5 of a refrigerant such as "R-134a" take when permeating through the hose longer. Accordingly, by adding the scale-shape filler 4, the same effect as that produced by thickening the inner layer material can be obtained. Incidentally, reference numeral 6 denotes the permeation route of the gas.

If the amount of the scale-shape filler 4 which is added to the inner layer material is increased, the extruded skin surface will become bad in quality and practically useless. For such reason, in the prior art, the reduction of the permeation amount through the use of such scale-shape filler 4 was effective only to a limited extent. In the present invention, an extruded skin surface for practical use as it is extruded can be obtained by adding a predetermined amount of carbon black to the rubber material in addition to the scale-shape filler, for the interaction between a polymer and carbon black is caused.

The rubber material of the inner layer material of the refrigerant transporting rubber hose of the present invention is preferably a butyl-based rubber. Besides common butyl rubbers, for example, chlorinated isobutylene-isoprene rubber (Cl-IIR), brominated isobutylene-isoprene rubber (Br-IIR), isobutylene-bromoparamethyl-styrene copolymer, and blends with other polymers that are mainly composed of butyl-based rubbers mentioned above are also available. Moreover, to these rubbers may be suitably added common additives such as processing auxiliaries, antioxidants, vulcanizing agents, vulcanization accelerators, etc.

Although there is no particular restriction as to the scale-shape filler provided that it is in the form of scales, an inorganic substance having a good compatibility with the polymer is preferred, examples of which are silicates such as magnesium silicate, calcium carbonate, silica, alumina, magnesium, and oxides thereof, mica, clay, and talc.

In the present invention, 60 - 200 parts by weight, preferably 70 - 150 parts by weight of the scale-shape filler is added per 100 parts by weight of the rubber material. If the amount of the filler to be added is less than 60 parts by weight, the refrigerant permeation reduction effect being an object in the present invention is not fully exhibited. Moreover, an amount exceeding 200 parts by weight leads to failure in providing the material in the form of a sheet, because the filler is not properly dispersed nor kneaded into a rubber dough.

Further, the scale-shape filler is required to have an aspect ratio R figured out by dividing average diameter by thickness (the ratio of the longitudinal length to the width) and satisfying preferably $2 \leqq R \leqq 100$, more preferably $4 \leqq R \leqq 40$, and an average diameter of preferably 0.5 - 700 $\mu$ m, more preferably 1.0 - 80 $\mu$ m. As employed herein, the term "average diameter" is defined by the following formula: $2 \times \sqrt{S/\pi}$ (S represents the area of each scale). If the value R is smaller than 2, the effect of preventing the gas from permeating through the hose is not achieved. A value R larger than 100 causes degradation of its good extrusion processability. Moreover, if the diameter is smaller than 0.5 $\mu$ m, the gas permeation inhibiting effect is not exhibited. If the diameter is larger tan 700 $\mu$m, a good extrusion processability cannot be obtained.

Carbon black to be used in the present invention is one that is for use herein, for example, SAF, ISAF, HAF, SPF, XCF, FEF, GPF, APF, MT, a mixture thereof, or one that is employed in ordinary rubber blending, and there is no particular restriction.

The amount of carbon black to be added is, per 100 parts by weight of the rubber material, 10 - 100 parts by weight, preferably 30 - 60 parts by weight. If the amount is less than 10 parts by weight, the smoothness of an extruded skin surface as examined by a flow tester which will later be described becomes bad with consequent uselessness. If the amount of carbon black exceeds 100 parts by weight, the calorific value gets high upon kneading, which facilitates the occurrence of scorching, making the kneading difficult.

The preferred embodiment of the refrigerant transporting rubber hose shown in Fig. 1(a) comprises reinforcing threads 2 between the inner layer 1 and an outer layer 3, but it should be understood that the mode of the hose of the present invention is not limited to the hose structure as described above. In the present invention, the inner layer 1 is comprised of any of the inner layer materials listed above, and the outer layer 3 can be made with, aside from a common butyl-based rubber, C1-IIR, Br-IIR, isobutylene-bromoparamethyl-styrene copolymer, acrylonitrile-butadiene rubber (NBR), hydrogenated acrylonitrile-butadiene rubber (H-NBR), ethylene-propylene-diene ternary copolymer rubber (EPDM), chloroprene rubber (CR), or a blend of these.

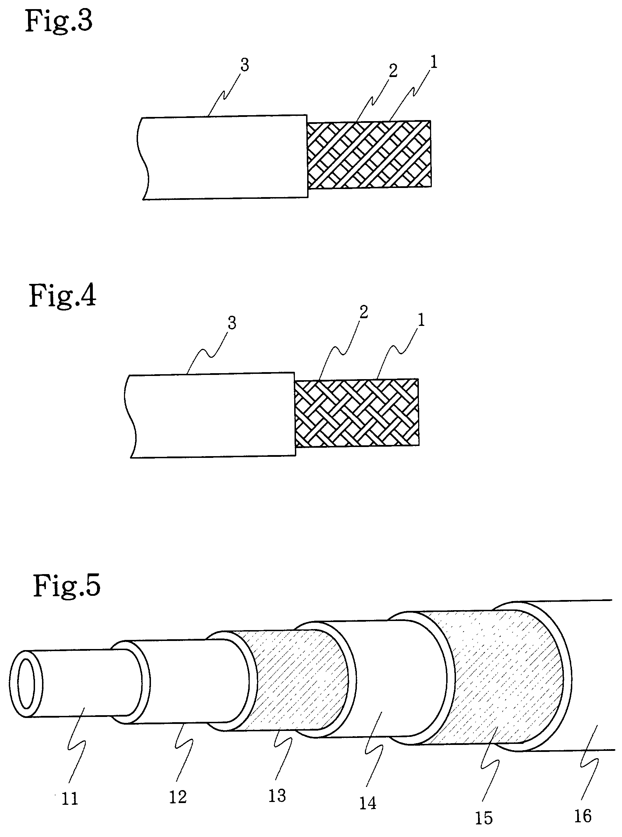

As the reinforcing threads 2, fiber such as polyester, nylon, vinylon, Kevlar, or mixed yam thereof is preferably employed. For example, the reinforcing threads are spirally wound around (see Fig. 3) or braided around (see Fig. 4) the inner layer 1. There is no particular restriction as to the fiber for this reinforcing fiber layer 3 nor how it is knitted, and the choice is suitably made according to its purpose.

Incidentally, the refrigerant transporting rubber hose of the present invention is particularly suitable for the transportation of a fluorine-containing compound as a refrigerant, and favorably used in automobiles.

As has been described above, the refrigerant transporting rubber hose of the present invention is capable of reducing the refrigerant permeation amount to a higher extent than earlier without changing the volume thereof while maintaining the practicability of its extruded skin surface and therefore suitable for use in the engine room of an automobile, and others.

In Fig. 5, the laminated structure of another embodiment of the refrigerant transporting hose according to the present invention is shown.

The refrigerant transporting hose of the present invention comprises, as its innermost layer, a first inner tube rubber layer 11 that shows excellent mold-releasing properties against the material of a mandrel. The first inner tube rubber layer 11 is made of a material excellent in refrigerant resistance, oil resistance, and permeation resistance. Concrete preferred examples of the material of the rubber layer 11 include butyl-based rubbers (IIR), ethylene-propylene ternary copolymer rubber (EPDM), nitrile-butadiene rubber (NBR), hydrogenated nitrile-butadiene rubber (H-NBR), chloroprene rubber (CR), acrylic rubber (ACM), and ethylene acrylic copolymer rubber (AEM). From the viewpoint of permeation resistance, a butyl-based rubber (IIR) is particularly preferred. As employed herein, rubbers expressed by the term "butyl-based rubber" include, besides common butyl-based rubbers, chlorinated isobutylene-isoprene rubber (Cl-IIR), brominated isobutylene-isoprene rubber (Br-IIR), isobutylene-bromoparamethyl-styrene copolymer, and blends with other polymers that are mainly constituted of these rubbers. Incidentally, to these rubbers may be suitably added common additives such as processing auxiliaries, antioxidants, vulcanizing agents, vulcanization accelerators, etc.

Into the first inner tube rubber layer 11 may be incorporated less than 50 parts by weight of the scale-shape filler, which will later be described, per 100 parts by weight of the rubber material, whereby the permeation resistance is further improved. Incorporation of 50 parts by weight or more of the scale-shape filler leads to the degradation of mandrel removability and therefore is unfavorable. In this case, it is preferred that carbon black is added in 10 - 100 parts by weight. If the amount of carbon black is smaller than 10 parts by weight, the extruded skin surface will be inferior. On the other hand, if the amount exceeds 100 parts by weight, the calorific value gets greater upon kneading, which facilitates the occurrence of scorching, making the kneading difficult. In this case, from the viewpoint of gas blister resistance, it is also preferred that 0.5 - 5 parts by weight of a silane coupling agent is added per 100 parts by weight of the rubber material. However, incorporation of the silane coupling agent in an amount exceeding 5 parts by weight leads to the degradation of rubber properties and therefore is unfavorable. Carbon black and the silane coupling agent may be the same as those added to the second inner tube rubber layer 2 which will be described below.

Since the function of the first inner tube rubber layer 11 is mainly to improve mandrel removability, it is unnecessary to make the layer too thick. The layer is formed to have such a thickness as may not to adversely affect the productivity. The thickness of the first inner tube rubber layer 11 is usually 0.2 - 1.5 mm, more preferably 0.3 - 1.0 mm.

A second inner tube rubber layer 12 being the upper layer of the first inner tube rubber layer 11 inhibits the permeation of a refrigerant and that of moisture from the exterior while supporting the internal pressure. For rendering the second inner tube rubber layer 12 sufficiently refrigerant-impermeable, an IIR-type polymer is employed as the principle polymer. In addition, a scale-shape filler is added thereby to further improve the permeation resistance. Since the scale-shape filler incorporated into the layer 12 is oriented in layers in the direction of hose extrusion, molecules of a refrigerant such as "R-134a" cannot permeate through the second inner tube rubber layer 12 straightly. In other words, the scale-shape filler has the effect of making the route that molecules of a refrigerant such as "R-134a" take when permeating through the hose longer. Accordingly, by adding the scale-shape filler, the same effect as that produced by thickening the inner layer material can be obtained.

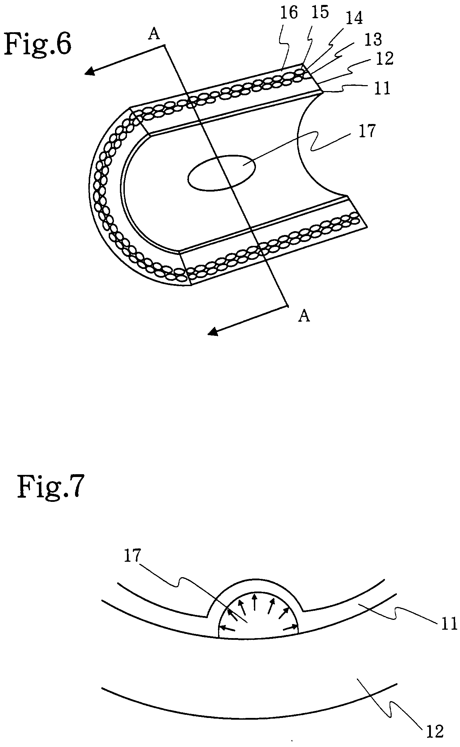

If the amount of the scale-shape filler which is incorporated into the second inner tube rubber layer 12 is increased, its extruded skin surface will be degraded in quality and thus useless. For such reason, in the prior art, the reduction of the permeation amount through the use of such scale-shape filler was effective only to a limited extent. In the present invention, the extruded skin surface for practical use as it is molded can be obtained by adding a predetermined amount of carbon black to the rubber material in addition to the scale-shape filler, for the interaction between a polymer and carbon black is caused. According to the present invention, together with carbon black, a predetermined amount of a silane coupling agent is added to the rubber material thereby to improve gas blister resistance. As a result, the first inner tube rubber layer 11 is inhibited from blistering as is illustrated in Fig. 6 like a gas blister 17. As can be seen from Fig. 7 showing an enlarged cross-section taken along the line A-A of Fig. 6, the gas blister 17 is caused by a local increase in gas pressure at the interface of the first inner tube rubber layer 11 and the second inner tube rubber layer 12. Such blistering results from the delamination at the interface of the scale-shape filler and the rubber, and the addition of a silane coupling agent inhibits the occurrence of delamination. Thus, in this case, even if a scale-shape filler or the like is not added into the first inner tube rubber layer 11, the effects of the present invention are fully exhibited.

The rubber material for use as the inner layer material of the refrigerant transporting rubber hose of the present invention is preferably such an IIR-type rubber as mentioned above. Moreover, to the rubber may be suitably added common additives such as processing auxiliaries, antioxidants, vulcanizing agents, vulcanization accelerators, etc.

Incidentally, exemplified as the scale-shape filler are the same as those mentioned above. Particularly, magnesium silicate (e.g., trade name MISTRON VAPOR manufactured by Nihon Mistron Co., Ltd. (hereinafter, referred to as "MISTRON VAPOR")) is favorably used. The requirements of the scale-shape filler are the same as described above.

In the present invention, 60 - 200 parts by weight, preferably 70 - 150 parts by weight of the scale-shape filler is added per 100 parts by weight of the rubber material. If the amount is less than 60 parts by weight, the refrigerant permeation reduction effect being an object in the present invention is not fully achieved. Moreover, an amount exceeding 200 parts by weight leads to failure in providing the material in the form of a sheet, because the filler is not properly dispersed nor kneaded into a rubber dough.

The carbon black to be employed and its amount are the same as specified above.

Examples of the silane coupling agent to be used in the present invention are those represented by the general formula: Y-SiX$_3$ and silane compounds having a polysulfide bond within its molecule. In the formula, examples of the group denoted by Y are reactive organic functional groups such as amino, epoxy, vinyl, methacryl, and mercapto groups, and non-reactive groups such as alkyl and halogenated alkyl groups. X is, for example, a hydrolyzable group typified by alkoxy groups (RO). Exemplified as the silane compound having a polysulfide bond within it molecule are those represented by the general formula:

$$(RO)_3Si(CH_2)_nS_x(CH_2)_nSi(RO)_3$$

and compounds represented by the general formula:

$$(RO)_3Si(CH_2)_n\text{-}S_xNSC_6H_{4.}$$

A silane compound having a polysulfide bond within its molecule is particularly preferred.

The silane coupling agent is added in 0.5 - 5 parts by weight per 100 parts by weight of the rubber material. If the amount is less than 0.5 part by weight, the gas blister resistance improving effect is not exhibited. On the other hand, if the amount exceeds 5 parts by weight, the elongation of rubber at break will be less than 200% and the resulting material cannot be put to practical use.

The gauge of the second inner tube rubber layer 12 is set taking anti-permeation ability, flexibility, and others into consideration. Needless to say, the greater the thickness gauge is, the better the ability to inhibit the permeation of a refrigerant and moisture will become. The thickness of the layer usually falls within the range of 0.5 - 2.5 mm, more preferably 0.8 - 1.5 mm.

Incidentally, the adhesion between a plurality of inner tube rubber layers can be strengthened with the use of an adhesive. Alternatively, the interlayer adhesion is further enhanced through corona discharge treatment or any of other surface treatments.

In the illustrated embodiment, although reinforcing layers 13 and 15 constitute a two-layer structure with an intermediate rubber layer 14 interposed therebetween, the reinforcing layer structure is not limited to the two-layer type and the hose may have three or more reinforcing layers. The intermediate rubber layer 14 is provided only if necessary and may be omitted. Properties required of the reinforcing layers 13 and 15 are, in addition to heat resistance and fatigue resistance, high strength and high elasticity, and polyethylene terephthalate (PET) fiber is favorably used. Besides PET fiber, preferably employed are vinylon, nylon, PEN (polyethylene naphthalate), aramid, aromatic PET fiber, etc. If necessary, mixed fiber or yarn being the combination of two or more kinds of fibers is employed. The use of reinforcing threads having a higher modulus of elasticity restrains changes in the inside diameter of the hose upon application of pressure as compared with the case of the use of reinforcing threads with a low modulus of elasticity, so that, under the same conditions of use, the inside diameter of the hose gets relatively smaller, thus reducing the refrigerant permeation amount.

The thickness of the threads and the number of threads to be braided are determined taking the safety factor against the actual pressure of use into consideration. Preferably, at least two layers of threads are wound around the inner layer, the directions of winding being opposite to each other. If need be, as described above, an intermediate rubber layer is interposed between the layers. Moreover, a preparatory braid layer (now shown) may be provided between the reinforcing layer 13 and the second inner tube rubber layer 12. If necessary, the outer circumferential surface of each reinforcing layer may be supported by backing threads. The thickness of each reinforcing thread is preferably 56 - 778 tex (500-7000D), more preferably 222 - 556 tex (2000 - 5000D). Although the number of reinforcing threads depends on the hose diameter, preferably a bundle of 8 - 60 threads, more preferably a bundle of 12 - 36 threads is spirally wound so as that the directions of winding alternately cross. In the present invention, the structure of the reinforcing layers is not limited to a spiral structure and it may be of a well-known braided structure.

The reinforcing layers 13 and 15 thus formed have both the function of supporting the pressure of a fluid inside the hose and that of, under the action of internal pressure, restraining changes in hose inside diameter and are required to have high moduli of elasticity. In addition, these layers need to be excellent in fatigue resistance and heat resistance.

The primary function of an outer covering rubber layer 16 is to protect the reinforcing layers and its material is selected taking heat resistance, oil resistance, ozone crack resistance, flexibility, external appearance, and other properties into consideration. To be more concrete, although it is preferred that the material of the rubber layer 16 comprises ethylene-propylene-diene ternary copolymer rubber (EPDM) as its substrate polymer, it may be made with, for example, CR, IIR, or styrene-butadiene rubber (SBR), or a blend thereof. The thickness of the outer covering rubber layer 16 preferably falls within the range of 0.5-2.5 mm, more preferably 0.8 - 1.5 mm. Further, if necessary, a hole or holes may be pricked in the outer covering rubber layer 16 for gas ventilation.

The refrigerant transporting rubber hose of the present invention is particularly suitable for the transportation of a fluorine-containing compound as a refrigerant, and favorably used in automobiles.

The refrigerant transporting rubber hose of the present invention described above is capable of reducing the refrigerant permeation amount to a higher extent than earlier without being increased in volume nor sacrificing mandrel removability and therefore suitable for use in the engine room of an automobile, and others.

EXAMPLES

Hereinafter, the present invention will be described based on examples.

Examples 1-11, Comparative Examples 1-7

(1) Fabrication of inner layer rubber sheet for test/evaluation

The blending ratio of the inner layer material in each example or comparative example is shown in the following Table 1 or 2. In Table 1 and Table 2, employed as the scale-shape filler is one having an aspect ratio of 12 and an average diameter of 2.3 μ m. Each inner layer material prepared according to the recipe was extruded in the form of a sheet having a thickness of 1 mm and vulcanized at 150°C for 50 minutes to provide a vulcanized rubber sheet for the test/evaluation (2) below.

(2) Evaluation item and evaluation method

(i) Gas (R-134a) permeation resistance

Letting the permeation coefficient in Comparative Example 1 be 100%, the gas permeation resistance was graded good (○) if a reduction by 40% or more was observed, otherwise it was graded bad (×).

(ii) Kneadability

If the ingredients were kneaded into a rubber dough and it was possible to roll out the dough, the material was "kneadable," otherwise "unkneadable".

(iii) Evaluation of extruded skin surface by flow tester

Using a Shimadzu flow tester CFT-500, the extruded skin surface was examined. Approximately 1.5 g of kneaded rubber was fed to a cylinder with a cross-sectional area of 1 cm² and warmed at 100°C for 5 minutes. Then, the kneaded rubber was extruded by a piston (plunger) with a cross-sectional area of 1 cm² under a load of 784N. The temperature at the time of extrusion was set at 100°C. The diameter of the die (nozzle) was 1 mm, and the length was 1mm. The skin surface of the extruded rubber strand was visually examined. If the surface was smooth, it was graded good (○), otherwise it was graded bad (×). The results are shown in Table 1 and Table 2 below.

Table 1

| | | Examples | | | | | | | | | | |
|---|---|---|---|---|---|---|---|---|---|---|---|---|
| | | 1 | 2 | 3 | 4 | 5 | 6 | 7 | 8 | 9 | 10 | 10 |
| Inner layer material blending ratio (parts by weight) | CI-IIR | 100 | 100 | 100 | 100 | 100 | 100 | 100 | 100 | 100 | 100 | 100 |
| | Carbon black *1 | 10 | 10 | 30 | 30 | 30 | 60 | 60 | 80 | 80 | 100 | 100 |
| | Scale-shape filler *2 | 60 | 200 | 100 | 150 | 200 | 60 | 150 | 120 | 150 | 60 | 200 |
| | Stearic acid | 1 | 1 | 1 | 1 | 1 | 1 | 1 | 1 | 1 | 1 | 1 |
| | Wax | 1 | 1 | 1 | 1 | 1 | 1 | 1 | 1 | 1 | 1 | 1 |
| | Zinc flower | 5 | 5 | 5 | 5 | 5 | 5 | 5 | 5 | 5 | 5 | 5 |
| | TMTD | 1 | 1 | 1 | 1 | 1 | 1 | 1 | 1 | 1 | 1 | 1 |
| | MBTS | 1 | 1 | 1 | 1 | 1 | 1 | 1 | 1 | 1 | 1 | 1 |
| Evaluation | Kneadability | Kneadable | | | | | | | | | | |
| | Permeation coefficient *3 P x $10^{-9}$ (cc, cm/cm$^2$, cmHg, sec.) | 0.962 | 0.375 | 0.717 | 0.505 | 0.358 | 0.945 | 0.505 | 0.587 | 0.473 | 0.929 | 0.358 |
| | Ratio of permeation coefficient to that of Comparative Example 1 | 0.59 | 0.23 | 0.44 | 0.31 | 0.22 | 0.58 | 0.31 | 0.36 | 0.29 | 0.57 | 0.22 |
| | Gas permeation resistance | ○ | ○ | ○ | ○ | ○ | ○ | ○ | ○ | ○ | ○ | ○ |
| | Smoothness of extruded skin surface tested by flow tester | ○ | ○ | ○ | ○ | ○ | ○ | ○ | ○ | ○ | ○ | ○ |

Table 2

| | | Comparative Examples | | | | | | |
|---|---|---|---|---|---|---|---|---|
| | | 1 | 2 | 3 | 4 | 5 | 6 | 7 |
| Inner layer material blending ratio (parts by weight) | CI-IIR | 100 | 100 | 100 | 100 | 100 | 100 | 100 |
| | Carbon black *1 | 60 | 10 | 10 | 60 | 100 | 100 | 110 |
| | Scale-shape filler *2 | 0 | 50 | 210 | 50 | 50 | 210 | 60 |
| | Stearic acid | 1 | 1 | 1 | 1 | 1 | 1 | 1 |
| | Wax | 1 | 1 | 1 | 1 | 1 | 1 | 1 |
| | Zinc flower | 5 | 5 | 5 | 5 | 5 | 5 | 5 |
| | TMTD | 1 | 1 | 1 | 1 | 1 | 1 | 1 |
| | MBTS | 1 | 1 | 1 | 1 | 1 | 1 | 1 |
| Evaluatior | Kneadability | Kneadable | Kneadable | Unkneadable | Kneadable | Kneadable | Unkneadable | Unkneadable |
| | Permeation coefficient *3 P x $10^{-9}$ (cc, cm/cm$^2$, cmHg, sec.) | 1.63 | 1.08 | - | 1.06 | 1.03 | - | - |
| | Ratio of permeation coefficient to that of Comparative Example 1 | 1 | 0.66 | - | 0.65 | 0.63 | - | - |
| | Gas permeation resistance | X | X | - | X | X | - | - |
| | Smoothness of extruded skin surface tested by flow tester | ○ | ○ | - | ○ | ○ | - | - |

*1: Asahi carbon N55-NP

*2: magnesium silicate (manufactured by Nihon Mistron Co., Ltd., trade name: MISTRON VAPOR)

*3: R-134a permeation coefficient of inner layer material sheet at 100°C (according to JIS-K7126)

In Table 2, for Comparative Examples 3, 6 and 7, it was impossible to examine gas permeation resistance and the smoothness of extruded skin surface by a flow tester, for the ingredients were unkneadable.

Examples 12 - 14, Comparative Examples 8 - 12

(1) Process for fabricating hose

Firstly, in each of Examples 12 - 14 and Comparative Examples 8 - 10 and 12, the thickness of the inner layer material was fixed at 2.9 mm. Only in Comparative Example 11, the amount of the inner layer material was varied to extrude it in the form of a tube having an inside diameter of 10.2 mm. The inner layer material was then reinforced with a polyester reinforcing fiber layer having a thickness of 1.4 mm. The inner layer material was further covered with an outer layer material mainly composed of EPDM and extruded in a thickness of 1. 6 mm to give a hose, the outer layer material being prepared in accordance with the blending recipe shown in Table 3 below. Each hose was examined for the following evaluation items.

(2) Evaluation items of each hose and method

(i) Gas (R-134a) permeation resistance

Letting the permeation coefficient in Comparative Example 8 be 100%, the gas permeation resistance was graded good ($\bigcirc$) when a reduction by 40% or more was observed, otherwise it was graded bad ($\times$).

(ii) Evaluation method of outside diameter of hose

Taking a value of 22.0 mm in Examples to be "good ($\bigcirc$)," an outside diameter greater than this value was graded "bad ($\times$)." The results are shown in Table 4.

Table 3

| Ingredients | Parts by weight |
|---|---|
| EPDM | 100 |
| FEF | 100 |
| Stearic acid | 1 |
| Paraffin oil | 70 |
| Zinc flower | 5 |
| Sulfur | 1 |
| TMTD | 1 |
| MBTS | 1 |

Table 4

| | | Examples | | | Comparative examples | | | | |
|---|---|---|---|---|---|---|---|---|---|
| | | 12 | 13 | 14 | 8 | 9 | 10 | 11 | 12 |
| Inner layer material blending ratio (parts by weight) | CI-IIR | 100 | 100 | 100 | 100 | 100 | 100 | 100 | 100 |
| | Carbon black *1 | 10 | 30 | 100 | 60 | 10 | 60 | 60 | 100 |
| | Scale-shape filler *2 | 60 | 150 | 200 | 0 | 50 | 50 | 50 | 50 |
| | Stearic acid | 1 | 1 | 1 | 1 | 1 | 1 | 1 | 1 |
| | Wax | 1 | 1 | 1 | 1 | 1 | 1 | 1 | 1 |
| | Zinc flower | 5 | 5 | 5 | 5 | 5 | 5 | 5 | 5 |
| | TMTD | 1 | 1 | 1 | 1 | 1 | 1 | 1 | 1 |
| | MBTS | 1 | 1 | 1 | 1 | 1 | 1 | 1 | 1 |
| Inner layer thickness (mm) | | 2.9 | 2.9 | 2.9 | 2.9 | 2.9 | 2.9 | 3.4 | 2.9 |
| Evaluation | R-134a permeation amount (g/m/72hour) *3 | 4.6 | 2.48 | 1.68 | 8.0 | 5.28 | 5.24 | 4.6 | 5.24 |
| | Gas permeation resistance | ○ | ○ | ○ | x | x | x | ○ | x |
| | Outside diameter of hose (mm) | 22.0 | 22.0 | 22.0 | 22.0 | 22.0 | 22.0 | 23.0 | 22.0 |
| | Evaluation of outside diameter of hose | ○ | ○ | ○ | ○ | ○ | ○ | x | ○ |

*1 - 3 are as were defined above

Examples 15 - 18, Comparative Examples 13 - 15

The first inner tube rubber layer 1 in each of Examples 15 - 18 and Comparative Examples 13 - 15 was made with a rubber composition prepared from the ingredients specified in Table 5 below.

Table 5

| | Parts by weight |
|---|---|
| CI-IIR | 100 |
| Carbon black[1] | 60 |
| MISTRON VAPOR | 0 |
| Stearic acid | 1.0 |
| Paraffin oil | 3.0 |
| KYOWAMAG 150[2] | 0.1 |
| TMTD[3] | 1.2 |
| Zinc flower | 5.0 |

1)N55-NP manufactured by Asahi Carbon Co., Ltd.
2) Kyowa Chemical Industry Co., Ltd.
3) NOCCELER TT, Ouchishinko Chemical Industrial Co., Ltd

The second inner tube rubber layers 12 were made with rubber compositions prepared according to their respective blending recipes shown in Table 6 below.

The test hoses thus obtained were subjected to measurement of elongation of rubber at break to evaluate the practicability of rubber in terms of physical properties. The practicability of the hoses was also evaluated from the viewpoint of gas blistering. The results are shown in Table 6 together.

Table 6

| | | Comparative examples | | Examples | | | | Comparative example |
|---|---|---|---|---|---|---|---|---|
| | | 13 | 14 | 15 | 16 | 17 | 18 | 15 |
| Ingredients (parts by weight) | CI-IIR | 100 | 100 | 100 | 100 | 100 | 100 | 100 |
| | Carbon black (N55-NP) | 25 | 25 | 25 | 25 | 25 | 25 | 25 |
| | MISTRON VAPOR | 130 | 130 | 130 | 130 | 130 | 130 | 130 |
| | Stearic acid | 1.0 | 1.0 | 1.0 | 1.0 | 1.0 | 1.0 | 1.0 |
| | Paraffin oil | 3.0 | 3.0 | 3.0 | 3.0 | 3.0 | 3.0 | 3.0 |
| | Silane coupling agent[4] | 0 | 0.23 | 0.5 | 1.0 | 3.0 | 5.0 | 6.0 |
| | KYOWAMAG 150 | 0.1 | 0.1 | 0.1 | 0.1 | 0.1 | 0.1 | 0.1 |
| | TMTD | 1.2 | 1.2 | 1.2 | 1.2 | 1.2 | 1.2 | 1.2 |
| | Zinc flower | 5.0 | 5.0 | 5.0 | 5.0 | 5.0 | 5.0 | 5.0 |
| Elongation at break (%) | | 380 | 330 | 250 | 230 | 210 | 200 | 180 |
| Physical properties of rubber[5] | | ◎ | ◎ | ○ | ○ | ○ | Δ | × |
| Gas blister[6] | | × | × | Δ | ○ | ◎ | ◎ | ◎ |

4) Si-69 manufactured by DEGUSSA

5) × : impractical Δ: concern about its practicability ○,◎ no problem in its practical use

6) examined according to SAEJ2064 5.2

×: impractical Δ: concern about its practicability ○,◎ no problem in its practical use

Examples 19 - 22, Comparative Example 16

The second inner tube rubber layer 12 in each example was made with a rubber composition prepared according to the blending recipe of Example 16 shown in Table 6 above. The first inner rubber layers 11 were made with rubber compositions prepared according to their respective blending recipes shown in Table 7 below.

The test hoses thus obtained were evaluated for mandrel removability in terms of practicability. As in Example 15, the practicability of the hoses was also evaluated from the viewpoint of gas blistering. The results are shown in Table 7 together.

Table 7

| | | Examples | | | | Comparative example |
|---|---|---|---|---|---|---|
| | | 19 | 20 | 21 | 22 | 16 |
| Ingredients (parts by weight) | CI-IIR | 100 | 100 | 100 | 100 | 100 |
| | Carbon black (N55-NP) | 60 | 60 | 60 | 60 | 60 |
| | MISTRON VAPOR | 0 | 10 | 20 | 30 | 50 |
| | Stearic acid | 1.0 | 1.0 | 1.0 | 1.0 | 1.0 |
| | Paraffin oil | 3.0 | 3.0 | 3.0 | 3.0 | 3.0 |
| | Silane coupling agent (Si-69) | 0 | 1.0 | 1.0 | 1.0 | 1.0 |
| | KYOWAMAG 150 | 0.1 | 0.1 | 0.1 | 0.1 | 0.1 |
| | TMTD | 1.2 | 1.2 | 1.2 | 1.2 | 1.2 |
| | Zinc flower | 5.0 | 5.0 | 5.0 | 5.0 | 5.0 |

Table 7   (continued)

| Gas blister | | ○ | ○ | ◎ | ◎ | ◎ |
|---|---|---|---|---|---|---|
| Mandrel removability[7] | | ○ | ○ | ○ | △ | × |

7) ×: impractical △: concern about its practicability ○,◎ no problem in its practical use

**Claims**

1.  A refrigerant transporting rubber hose of a layered structure at least comprising an inner layer (1) and an outer layer (3), wherein an inner layer material forming the inner layer contains 60-200 parts by weight of a scale-shape filler (4) and 10-100 parts by weight of carbon black per 100 parts by weight of a rubber material having as small a permeation coefficient against a refrigerant to be transported as possible.

2.  A refrigerant transporting rubber hose as claimed in claim 1, **characterized in that** the rubber material is a butyl-based rubber.

3.  A refrigerant transporting rubber hose as claimed in claim 1 or 2, **characterized in that** the aspect ratio R of the scale-shape filler (4) satisfies the relation represented by the following formula:

$$2 \leqq R \leqq 100$$

and the average diameter of the scale-shape filler is 0.5-700 μm.

4.  A refrigerant transporting rubber hose as claimed in any of claims 1 to 3, **characterized in that** the refrigerant to be transported is a fluorine-containing compound.

5.  A refrigerant transporting rubber hose as claimed in any of claims 1 to 4, **characterized in that** the amount of the scale-shape filler (4) is 70-150 parts by weight per 100 parts by weight of the rubber material.

6.  A refrigerant transporting rubber hose as claimed in any of claims 1 to 5, **characterized in that** the amount of the carbon black is 30-60 parts by weight per 100 parts by weight of the rubber material.

7.  A refrigerant transporting rubber hose formed by laminating, from its inner layer-side, at least an inner tube rubber layer (11,12), a reinforcing layer (13,15), and an outer covering rubber layer (16) in that order, the inner tube rubber layer having a laminated-structure constituted of different rubber blends the inner layer of which is a first inner tube rubber layer (11) and the outer layer of which is a second inner tube rubber layer (12), each of the first inner tube rubber layer and the second inner tube rubber layer being made with a rubber material of which the permeability coefficient against a refrigerant to be transported is low, the second inner tube rubber layer (12) containing 60-200 parts by weight of a scale-shape filler, 10-100 parts by weight of carbon black, and 0.5-5 parts by weight of a silane coupling agent per 100 parts by weight of the rubber material.

8.  A refrigerant transporting rubber hose formed by laminating, from its inner layer-side, at least an inner tube rubber layer (11,12), a reinforcing layer (13,15), and an outer covering rubber layer (16) in that order, the inner tube rubber layer having a laminated-structure constituted of different rubber blends the inner layer of which is a first inner tube rubber layer (11) and the outer layer of which is a second inner tube rubber layer (12), each of the first inner tube rubber layer and the second inner tube rubber layer being made with a rubber material of which the permeability coefficient against a refrigerant to be transported is low, the first inner tube rubber layer (11) containing less than 50 parts by weight of a scale-shape filler and 10-100 parts by weight of carbon black per 100 parts by weight of the rubber material.

9.  A refrigerant transporting rubber hose as claimed in claim 8, **characterized in that** the first inner tube rubber layer (11) contains 0.5-5 parts by weight of a silane-coupling agent per 100 parts by weight of the rubber material.

10. A refrigerant transporting rubber hose as claimed in any of claims 7 to 9, **characterized in that** the rubber material is a butyl-based rubber.

**11.** A refrigerant transporting rubber hose as claimed in any of claims 7 to 10, **characterized in that** the aspect ratio R of the scale-shape filler satisfies the relation represented by the following formula:

$$2 \leqq R \leqq 100$$

and the average diameter of the scale-shape filler is 0.5-700 µm.

**12.** A refrigerant transporting rubber hose as claimed in any of claims 7 to 11, **characterized in that** the refrigerant to be transported is a fluorine-containing compound.

Fig.1 (a)

(b)

(INSIDE OF HOSE INNER LAYER MATERIAL)

(OUTSIDE OF HOSE INNER LAYER MATERIAL)

## Fig.2 (a)

## (b)

(INSIDE OF HOSE INNER LAYER MATERIAL)

(OUTSIDE OF HOSE INNER LAYER MATERIAL)

Fig.3

Fig.4

Fig.5

Fig.6

16  15  14
       13
        12
         11

A

17

A

Fig.7

17

11

12